# EUROPEAN PATENT SPECIFICATION

(11) **EP 3 607 311 B1**
(45) Date of publication and mention of the grant of the patent: **02.06.2021**
(21) Application number: 17732588.3
(22) Date of filing: 05.04.2017
(51) Int. Cl.: G01N 27/447, B01L 3/00

(54) **LAB-ON-A-CHIP DIAGNOSIS DEVICE**
LAB-ON-A-CHIP-DIAGNOSEVORRICHTUNG
DISPOSITIF DE DIAGNOSTIC DE TYPE LABORATOIRE SUR PUCE

(43) Date of publication of application: 12.02.2020
(73) Proprietor: Dianax S.r.l., 20139 Milano (IT)
(72) Inventor: IANNONE Eugenio, 20127 Milano (IT); MORONI Maurizio, 2 132 Milano (IT); GERMANI Giacomo, 20090 Buccinasco (IT); GRECO Valentina, 73010 Guagnano (IT); MATTI Marina, 20161 Milano (IT)
(74) Representative: Savi, Massimiliano
(86) International application number: PCT/IT2017/000067
(87) International publication number: WO 2018/185793

(56) References cited:
- WO-A2-2010/091414
- JP-A- 2006 308 447
- JP-A- 2007 075 051
- US-A1- 2002 025 576
- US-A1- 2005 019 902
- US-A1- 2012 255 861
- US-A1- 2016 160 208
- US-B1- 6 372 484

## Description

The present invention relates to a lab-on-a-chip diagnosis device that is particularly, although not exclusively, useful and practical in the area of analytical and instrumental chemistry, which is adapted to support the clinical judgment of medical personnel for recognizing a pathological condition of a patient, i.e. an ill subject, and/or the monitoring of a pathological condition by way of the detection and quantification of protein analytes.

Lab-on-a-chip (LOC) devices are analysis devices that integrate one or more functions, usually carried out by one or more laboratory machines, on a single chip of reduced dimensions, which usually vary from a few square millimeters to a few square centimeters of surface area; these LOC devices are capable of processing extremely small volumes of fluids.

Nowadays, LOC devices are used in the most widely varying fields of interest, for example in the field clinical diagnostics, in the field of biomedical research, in particular in the sectors of immunology, pharmacology and biochemistry, in the industrial field and in the food sector.

Currently, many different diagnostic devices are known, both of the lab-on-a-chip type and of other types, for example over-the-counter chemical/clinical diagnosis systems.

WO 2010/091414 A2 discloses a lab-on-a-chip device in which a controlled and precise volume is obtained by control of the relative resistance to flow through various channels.

However, these conventional diagnostic devices are not devoid of drawbacks, among which is the fact that the operators often find them difficult and delicate to handle; furthermore, their sensitive and/or perishable parts are difficult to preserve and keep unaltered over time, a necessary requirement in order to obtain results that are always reliable.

Another drawback of conventional diagnostic devices consists in that a native sample, for example a blood sample, taken from the patient, needs to undergo preliminary treatments before it can be introduced into the diagnosis device in order to be analyzed.

These preliminary treatments entail potential direct contacts between the sample to be analyzed and the operator, with the risk that the sample can cause harm to the operator and/or can be contaminated by external agents, which require subsequent repetition of the analysis, with the consequent increase in risk to the health of the operator and also of costs.

A further drawback of conventional diagnostic devices consists in that often carrying out the diagnosis is lengthy and laborious, in that it requires, once the native sample to be analyzed has been gathered, for example by way of taking blood samples, many intermediate steps and much external handling.

Another drawback of conventional diagnostic devices consists in that often, their use requires knowledge and dexterity in handling the sample which are not within the abilities of operators that do not have specific training (for example patients).

In particular, a drawback of conventional LOC diagnosis devices, characterized by microfluidic movement of the internal fluids, consists in that they do not take account of the differences in pressure and temperature that exist between the environmental conditions of production and storage and the environmental conditions of use, with consequent disturbances of the microfluidic positioning of the internal fluids that render the results obtained unreliable or which, under certain conditions, completely prevent the use of conventional LOC diagnosis devices.

Another drawback of conventional LOC diagnosis devices, characterized by microfluidic movement of the internal fluids, consists in that they do not take account of the great variability of the chemical/physical properties of the native samples to be analyzed, leaving control of these properties to complex preliminary calibration procedures, which are not within the abilities of operators that do not have specific training, and which must be carried out before using the LOC diagnosis device.

The aim of the present invention is to overcome the limitations of the known art described above, by designing and providing a lab-on-a-chip diagnosis device that enables an easy and intuitive use, even by operators with no specific training, under any condition of pressure and/or temperature, inconvenience and/or emergency, without further contrivances.

Within this aim, an object of the present invention is to conceive of a lab-on-a-chip diagnosis device that enables an auto-stabilization of the internal conditions of pressure and temperature, thus ensuring its stability under all possible environmental conditions of use independently of the environmental conditions of production and storage.

Another object of the present invention is to devise a lab-on-a-chip diagnosis device that can be used on any type of sample to be analyzed, native or treated, without any preliminary calibration of the LOC diagnosis device.

Another object of the present invention is to conceive of a lab-on-a-chip diagnosis device that ensures the conservability and unalterability of the device proper, of the materials and of the internal fluids.

Another object of the present invention is to devise a lab-on-a-chip diagnosis device that provides quantitative diagnostic indications that are highly accurate, reliable and repeatable, and also rapidly executed.

Another object of the present invention is to conceive of a lab-on-a-chip diagnosis device the use of which does not require any manipulation (or very limited manipulation) by the operator of the biological sample to be analyzed, thus reducing the risks of human error and/or of contamination of the sample by external agents, and increasing the safety of use as well as the accuracy and reliability of measurement.

Another object of the present invention is to devise a lab-on-a-chip diagnosis device that is more versatile than conventional diagnostic devices, which often are made specifically for determined samples and/or analytes of interest.

Another object of the present invention is to provide a lab-on-a-chip diagnosis device that is highly reliable, easily and practically implemented, and low cost when compared to the known art.

This aim and these and other objects which will become better apparent hereinafter are achieved by a lab-on-a-chip diagnosis device according to claim 1. Preferred embodiments are described in dependent claims.

Further characteristics and advantages of the invention will become better apparent from the detailed description of a preferred, but not exclusive, embodiment, of the lab-on-a-chip diagnosis device according to the invention, which is illustrated by way of non-limiting example with the aid of the accompanying drawings, wherein:

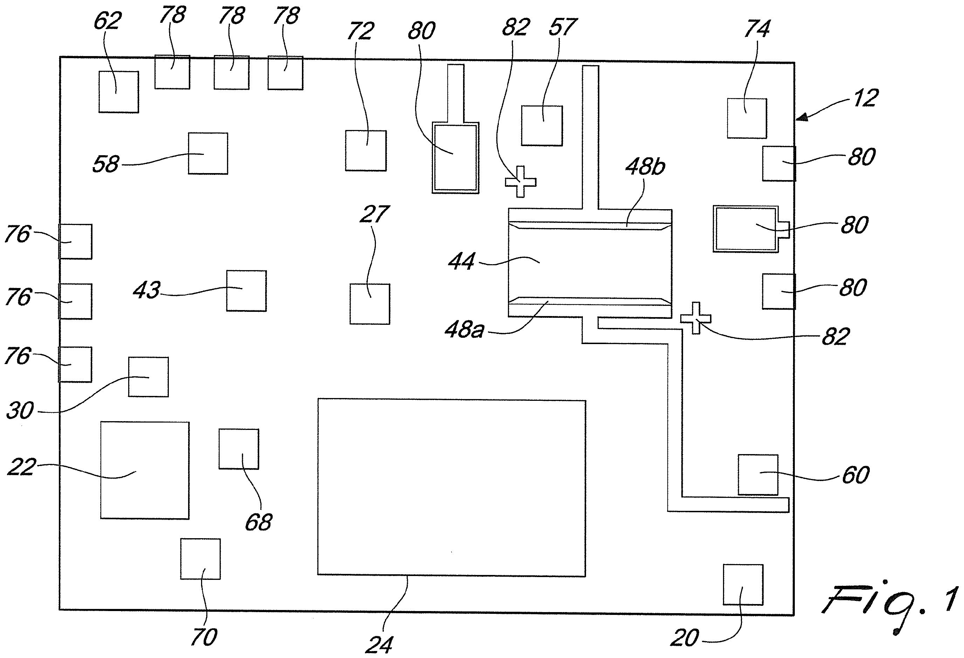

Figure 1 is a schematic plan view of the upper face of the main level of an embodiment of the lab-on-a-chip diagnosis device, according to the present invention;

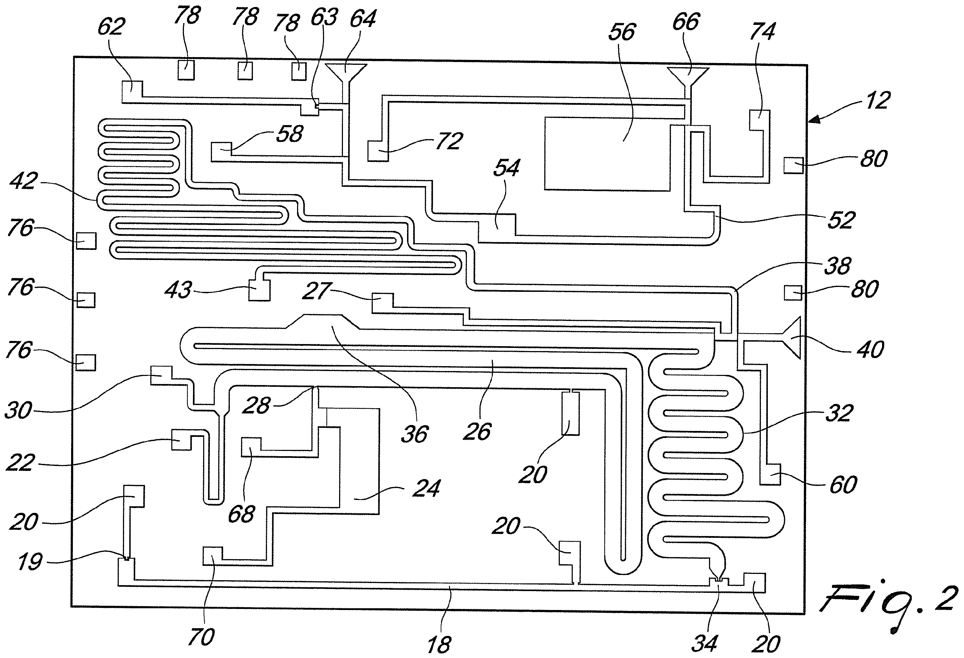

Figure 2 is a schematic plan view of the lower face of the main level of an embodiment of the lab-on-a-chip diagnosis device, according to the present invention;
Figure 3 is a schematic plan view of the upper face of the lower level of an embodiment of the lab-on-a-chip diagnosis device, according to the present invention;
Figure 4 is a schematic plan view of the lower face of the level closing the electrophoresis chamber of an embodiment of the lab-on-a-chip diagnosis device, according to the present invention;
Figure 5 schematically shows a longitudinal cross-sectional view of the elements of the electrophoresis chamber that generate the overall electrophoretic movement, from the dynamic injection to the static extraction, of an embodiment of the lab-on-a-chip diagnosis device, according to the present invention;

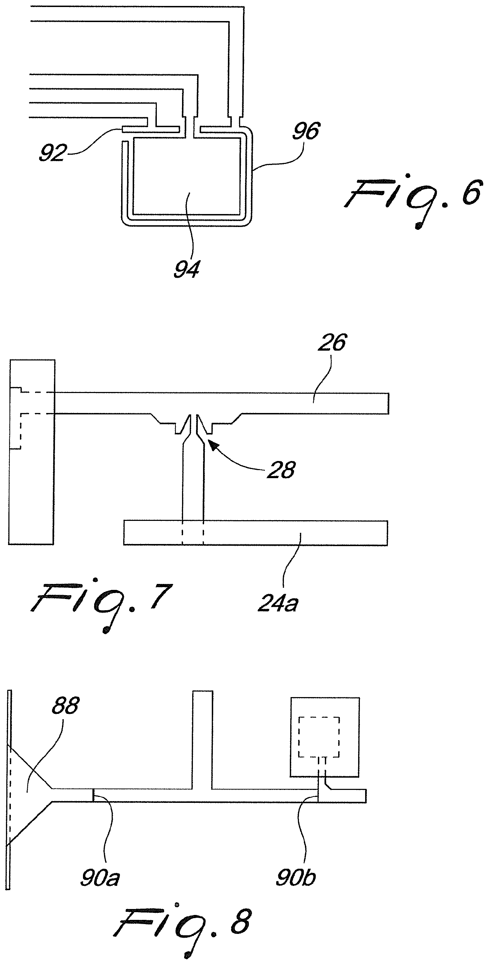

Figure 6 shows a possible configuration of a set of electrodes for electrochemical detection/quantification in an embodiment of the lab-on-a-chip diagnosis device, according to the present invention;
Figure 7 schematically shows a possible configuration of a microfluidic valve of an embodiment of the lab-on-a-chip diagnosis device, according to the present invention;
Figure 8 schematically shows a possible configuration of a single-use valve of an embodiment of the lab-on-a-chip diagnosis device, according to the present invention.

With reference to the figures, the lab-on-a-chip diagnosis device according to the invention comprises substantially a main level 12, for example made of silicon, a lower level 16, for example made of glass, and a level 14 closing an electrophoresis chamber 44, for example made of glass. The lower level 16 adheres to the lower face of the main level 12, while the closing level 14 adheres to the upper face of the main level 12 at the electrophoresis chamber 44.

The LOC diagnosis device according to the invention, in particular the main level 12, comprises a network of ducts 18 and a plurality of vents 20, the vents being for the passage of air, which are adapted to stabilize the internal conditions of the LOC device, in particular pressure and/or temperature, which in practice are those of production, by making them conform to the external environmental conditions of use, in the event of differences in pressure and/or temperature. In an embodiment, the network of ducts 18 comprises a first microfluidic valve 19 proximate to one of the vents 20.

The LOC diagnosis device according to the invention, in particular the main level 12, comprises a sample loading station 22 adapted to introduce a sample of biological fluid to be analyzed, native or treated, preferably in the form of a drop. For example, this sample of biological fluid can be blood, urine or saliva.

The LOC diagnosis device according to the invention, in particular the main level 12, comprises a first buffer tank 24 containing a first buffer liquid, i.e. a liquid solution, adapted to condition and stabilize the sample to be analyzed. The first buffer tank 24 is in direct microfluidic communication with a pair of vents 68 and 70 that are adapted both to the loading of the first buffer tank 24 and to the passage of air.

Given that the composition of the first buffer liquid is closely linked to the sample to be conditioned (for example blood, urine, saliva, milk) and to the at least one analyte of interest to be detected, by way of example, for the pair of analytes hemoglobin and glycated hemoglobin, the first buffer liquid for conditioning and stabilization, contained in the first buffer tank 24, can be composed as follows:
- KHCO3 (1 mM);
- NH4Cl (155 mM);
- Azure C (250 µM);
- EDTA (1.5 mg/ml);
- FBA (3.35 mM);
- Buffer Ix (Histidine 20 mM, MOPS 35 mM, pH 5.5).

The LOC diagnosis device according to the invention, in particular the main level 12, comprises a mixing duct 26 which is in direct microfluidic communication with the sample loading station 22, and is separated from the first buffer tank 24, containing the first buffer liquid for conditioning and stabilization, by way of a second microfluidic valve 28. The mixing duct 26 is adapted to mix together the first buffer liquid for conditioning and stabilization and the sample to be analyzed, the latter led by a drop of first buffer liquid.

The LOC diagnosis device according to the invention, in particular the main level 12, comprises a buffer loading station 30 that is adapted to introduce the drop of first buffer liquid at the inlet of the mixing duct 26, this drop of first buffer liquid being adapted to move the sample to be analyzed. In particular, the drop of first buffer liquid is adapted to lead the microfluidic propagation of the sample to be analyzed, thus making the speed of propagation of samples with different chemical/physical characteristics conform.

This drop of first buffer liquid is identical in composition to the first buffer liquid for conditioning and stabilization contained in the first buffer tank 24. The sample to be analyzed comes into contact first of all with the drop of first buffer liquid, which therefore contains in turn the necessary composition for the conditioning and stabilization.

The LOC diagnosis device according to the invention, in particular the main level 12, comprises a first microfluidic pump 32 which is in direct microfluidic communication with the mixing duct 26, and is separated from the network of stabilization ducts 18 by way of a third microfluidic valve 34. The first microfluidic pump 32 is adapted first to pump the conditioned sample toward itself, and then to discharge a waste portion, i.e. a portion not containing the useful sample to be analyzed, of the first buffer liquid for conditioning and stabilization.

The LOC diagnosis device according to the invention comprises a vent 27 for the passage of air, which is in direct microfluidic communication with the mixing duct 26 and with the first microfluidic pump 32.

The LOC diagnosis device according to the invention, in particular the main level 12, comprises a calibration chamber 36 which is in direct microfluidic communication with the mixing duct 26. The calibration chamber 36 is adapted to quantify the volume of sample introduced into the LOC diagnosis device, by way of the sample loading station 22. Furthermore, the calibration chamber 36 is adapted to calibrate the LOC diagnosis device as a consequence, on the basis of the volume of sample.

The LOC diagnosis device according to the invention, in particular the main level 12, comprises an electrophoretic injection duct 38 which is adapted to introduce the conditioned sample into the electrophoresis region, in particular into the electrophoresis chamber 44.

The LOC diagnosis device according to the invention, in particular the main level 12, comprises a first single-use valve 40, for example of the fragmentation type that comprises a breakable membrane, adapted to separate the mixing duct 26 and the electrophoretic injection duct 38.

The LOC diagnosis device according to the invention comprises a first residue aspiration pump 60, which has a respective vent for the passage of air, and is associated with the first single-use valve 40, and is in direct microfluidic communication with the mixing duct 26. The first residue aspiration pump 60 is adapted to aspirate the substantially solid residues produced by opening the first single-use valve 40, for example the fragments of a breakable membrane.

The LOC diagnosis device according to the invention, in particular the main level 12, comprises a second microfluidic pump 42, which has a respective vent 43 for the passage of air arranged at one of its ends, and is in direct microfluidic communication with the electrophoretic injection duct 38. The second microfluidic pump 42 is adapted to pump toward itself the conditioned sample introduced into the electrophoresis region, in particular into the electrophoresis chamber 44.

The LOC diagnosis device according to the invention, in particular the upper layer 14, comprises an electrophoresis chamber 44 containing a separative filtering material, for example a hydrogel of nature varying according to the separative action required. The electrophoresis chamber 44 is adapted to purify the conditioned sample and concentrate the analyte of interest. In the electrophoresis chamber 44 a separative electrophoresis takes place and, by way of dynamic injection, the concentration of the analyte of interest takes place.

The LOC diagnosis device according to the invention, in particular the main level 12, comprises an electrophoretic extraction duct 52 which is adapted to extract the conditioned sample from the electrophoresis region, in particular from the electrophoresis chamber 44.

The LOC diagnosis device according to the invention comprises at least one first pair of electrophoresis electrodes 46a and 46b which are arranged respectively under and over the electrophoresis chamber 44, at the electrophoretic injection duct 38. The electrical field of the first pair of electrodes 46a and 46b pushes the conditioned sample from the electrophoretic injection duct 38 toward the, and up to the, separative filtering material contained in the electrophoresis chamber 44, in the direction dictated by the polarization of the electrical field itself.

The LOC diagnosis device according to the invention comprises at least one second pair of electrophoresis electrodes 48a and 48b which are arranged upstream and downstream of the electrophoresis chamber 44. The electrical field of the second pair of electrodes 48a and 48b push the conditioned sample through the separative filtering material contained in the electrophoresis chamber 44, in the direction dictated by the polarization of the electrical field itself.

The LOC diagnosis device according to the invention comprises at least one third pair of electrophoresis electrodes 50a and 50b which are arranged respectively over and under the electrophoresis chamber 44, at the electrophoretic extraction duct 52. The electrical field of the third pair of electrodes 50a and 50b pushes the extract, separated and concentrated by the separative filtering material contained in the electrophoresis chamber 44, toward the, and up to the, electrophoretic extraction duct 52, in the direction dictated by the polarization of the electrical field itself.

The LOC diagnosis device according to the invention, in particular the main level 12, comprises a detection chamber 54 which is in direct microfluidic communication with the electrophoretic extraction duct 52. The detection chamber 54 is adapted to detect and quantify the presence of the analyte of interest in the extract from the electrophoresis chamber 44.

In a preferred embodiment of the LOC diagnosis device according to the invention, the detection and the quantification of the analyte of interest are conducted electrochemically with conventional techniques, such as for example Square Wave Voltammetry or Cyclic Voltammetry, and with parameter settings necessary for the optimal detection and quantification of the analyte.

The LOC diagnosis device according to the invention, in particular the main level 12, comprises a second buffer tank 56, provided with a respective vent 57 which is adapted both to load the second buffer tank 56 and to allow the passage of air, and is in direct microfluidic communication with the electrophoretic extraction duct 52. The second buffer tank 56 is positioned upstream of the electrophoretic extraction duct 52. The second buffer tank 56 contains a second buffer liquid which is adapted to move the extract from the electrophoresis chamber 44, by leading its microfluidic propagation toward the, and up to the, detection chamber 54. Furthermore, this second buffer liquid is adapted to condition the extract by the electrophoresis chamber 44 to the best chemical conditions (ionic strength, pH and so on) in order to optimize the operations in the detection chamber 54. The second buffer tank 56 is in direct microfluidic communication with a vent 72 for the passage of air from that second buffer tank 56.

Given that the composition of the second buffer liquid is closely linked to the sample (for example blood, urine, saliva, milk) and to the at least one analyte of interest to be detected, by way of example, for the pair of analytes hemoglobin and glycated hemoglobin, the second buffer liquid, contained in the second buffer tank 56, can be composed as follows:
- Histidine (20 mM);
- MOPS (35 mM);
- NaCl (500 mM);
- HCl (2M), in order to obtain pH 5.5.

The LOC diagnosis device according to the invention, in particular the main level 12, comprises a third microfluidic pump 58, which has a respective vent for the passage of air, and is in direct microfluidic communication with the electrophoretic extraction duct 52. The third microfluidic pump 58 is adapted to pump toward itself the conditioned sample extracted from the electrophoresis region, in particular from the electrophoresis chamber 44.

The LOC diagnosis device according to the invention, in particular the main level 12, comprises a second single-use valve 64, for example of the fragmentation type that comprises a breakable membrane. Opening the second single-use valve 64 activates the third microfluidic pump 58.

The LOC diagnosis device according to the invention comprises a second residue aspiration pump 62, which has a respective vent for the passage of air, and is associated with the second single-use valve 64, and is separated from the electrophoretic extraction duct 52 by way of a fourth microfluidic valve 63. The second residue aspiration pump 62 is adapted to aspirate the substantially solid residues produced by opening the second single-use valve 64, for example the fragments of a breakable membrane.

The LOC diagnosis device according to the invention, in particular the main level 12, comprises a third single-use valve 66, for example of the fragmentation type that comprises a breakable membrane, adapted to separate the electrophoretic extraction duct 52 from the second buffer tank 56 and from the vent 72. Opening the third single-use valve 66 enables the second buffer liquid contained in the second buffer tank 56 to prevent the emptying of the electrophoretic extraction duct 52, thus preventing the consequent formation of bubbles and the blocking of the LOC diagnosis device.

The LOC diagnosis device according to the invention comprises a third residue aspiration pump 74, which has a respective vent for the passage of air, and is associated with the third single-use valve 66, and is in direct microfluidic communication with the electrophoretic extraction duct 52. The third residue aspiration pump 74 is adapted to aspirate the substantially solid residues produced by opening the third single-use valve 66, for example the fragments of a breakable membrane.

In essence, the second 64 and third 66 single-use valves both have the purpose of permitting the movement of the portion of liquid present in the electrophoretic extraction duct 52, underlying the electrophoresis chamber 44 and in which the analyte has been extracted, up to the detection chamber 54, in which the detection and the quantification of the analyte of interest will take place.

In general, the LOC diagnosis device according to the invention comprises a plurality of single-use valves, microfluidic valves and microfluidic pumps adapted to the microfluidic movement of the liquid containing the analyte of interest from the electrophoretic extraction duct 52 toward the, and up to the, detection chamber 54.

In general, the LOC diagnosis device according to the invention comprises a plurality of vents and inlets adapted to ensure the loading of the operating liquids into the LOC device and the correct microfluidic activity.

The LOC diagnosis device according to the invention, in particular the lower level 16, comprises a first set of electrodes for electrochemical detection/quantification 86 which is associated with the calibration chamber 36.

The LOC diagnosis device according to the invention, in particular the main level 12 and the lower level 16, comprises a first plurality of electrical contacts 76, for example 3 in number, for the electrical connection of the first set of electrodes for electrochemical detection/quantification 86 associated with the calibration chamber 36.

The LOC diagnosis device according to the invention, in particular the lower level 16, comprises a second set of electrodes for electrochemical detection/quantification 84 which is associated with the detection chamber 54.

The LOC diagnosis device according to the invention, in particular the main level 12 and the lower level 16, comprises a second plurality of electrical contacts 78, for example 3 in number, for the electrical connection of the second set of electrodes for electrochemical detection/quantification 84 associated with the detection chamber 54.

In an embodiment of the LOC diagnosis device according to the invention, both the first set 86 and the second set 84 of electrodes for electrochemical detection/quantification comprise a reference electrode 92 made of silver or silver/chloride, a working electrode 94 made of gold, and a counter electrode 96 made of gold.

The LOC diagnosis device according to the invention, in particular the main level 12 and the lower level 16, comprises a third plurality of electrical contacts 80 for the electrical connection of the pairs of electrodes 46a and 46b, 48a and 48b, 50a and 50b associated with the electrophoresis chamber 44.

In an embodiment of the LOC diagnosis device according to the invention, if one or more of the single-use valves 40, 64 and 66 is of the fragmentation type, then they comprise an entry 88 for mechanical breakage means, for example a needle, and a pair of breakable membranes 90a and 90b.

In an embodiment of the invention, the LOC diagnosis device, in particular the upper face of the main level 12 and the lower face of the closing level 14, comprises one or more markers for alignment 82, 82', proximate to the electrophoresis chamber 44, of various shape and size, which are adapted to the alignment and hence to the correct superimposition between the main level 12 and the level 14 closing the electrophoresis chamber 44.

The network of stabilization ducts 18, the plurality of stabilization vents 20, the sample loading station 22, the first buffer tank 24, the mixing duct 26, the buffer loading station 30, the calibration chamber 36, the electrophoretic injection duct 38, the electrophoresis chamber 44, the pairs of electrophoresis electrodes 46a and 46b, 48a and 48b, 50a and 50b, the electrophoretic extraction duct 52, the detection chamber 54, the second buffer tank 56, the plurality of single-use valves, microfluidic valves, microfluidic pumps, vents and inlets, are defined in a single chip and comprise inert containment surfaces, i.e. surfaces that are chemically and/or physically non-active, i.e. surfaces that have not undergone processes aimed at rendering them chemically and/or physically reactive.

In the present invention, the sample of biological fluid to be analyzed can be both a native sample and a treated sample. The native sample is a sample of biological fluid that has been taken directly from the patient, without being subjected to preliminary treatments prior to being introduced into the sample loading station 22 of the LOC diagnosis device. The treated sample, on the other hand, is a sample of biological fluid that, for different reasons depending on the individual case, has been subjected to preliminary treatments prior to being introduced into the sample loading station 22 of the LOC diagnosis device.

The LOC diagnosis device according to the invention makes it possible to analyze samples of biological fluids with extremely different chemical/physical characteristics (for example blood, urine, saliva or others, native or treated), by virtue of using a system entailing a drop of buffer liquid, to be introduced into the mixing duct 26 by way of the buffer loading station 30, which leads the homogeneous and uniform microfluidic propagation of the sample to be analyzed in the step of conditioning and stabilization, even for greatly differing biological fluids.

Likewise, the first buffer liquid, having completed its microfluidic propagation function, is excluded from the subsequent steps of purification and detection, by being trapped in the first microfluidic pump 32, which is conveniently separated from the network of stabilization ducts 18 by way of the third microfluidic valve 34.

The LOC diagnosis device according to the invention is particularly adapted for the detection of analytes of biomedical interest, such as for example proteins of various types, which are present in physiological fluids (for example blood, urine, saliva or others), by way of direct detection or by way of suitable chemical changes of the analyte which occur in the mixing duct 26 by way of the first buffer liquid for conditioning and stabilization.

Advantageously, the LOC diagnosis device according to the invention is also adapted to be used in the food industry sector, where liquids such as milk and wine can be analyzed in order to determine their quality, their sophistication and/or the presence of any harmful substances.

Advantageously, the LOC diagnosis device according to the invention is also adapted to be used in the veterinary and animal management sector, where biological fluids of an animal nature can be analyzed for diagnosis, monitoring of the development of possible diseases and/or the progress of treatments.

Advantageously, the LOC diagnosis device according to the invention is provided with a network of ducts 18 and a plurality of vents 20 which, at the time of use, stabilize the internal pressure and/or temperature of the LOC device proper, which in practice are those of production, by making them conform to the external environmental pressure and/or temperature, in the event of differences between the internal conditions of the device LOC and the external environmental conditions of use.

Advantageously, by virtue of the drop of first buffer liquid introduced by way of the buffer loading station 30, any native or treated sample, introduced into the mixing duct 26 by way of the sample loading station 22, is led through that mixing duct 26 at the optimal microfluidic speed for mixing effectively with the first buffer liquid for conditioning and stabilization originating from the first buffer tank 24.

The quantification of the sample introduced is conveniently carried out inside the calibration chamber 36 where, by way of detection of the concentration of the analyte at initial known concentration, it is possible to easily arrive at the volume of sample introduced into the LOC diagnosis device.

Advantageously, the electrophoresis assembly that comprises the electrophoresis chamber 44 and the pairs of electrophoresis electrodes 46a and 46b, 48a and 48b, 50a and 50b enables a dynamic injection into the separative filtering material of the analyte and of the accompanying proteins contained in the conditioned liquid that flows through the electrophoretic injection duct 38, with the purification and the concentration of that analyte when it is finally extracted from the electrophoretic extraction duct 52.

Such solution of two-dimensional electrophoresis is particularly useful for complex samples and samples that are rich in impurities, or for analytes that travel accompanied by similar molecules and which thus would not be effectively separable using a normal one-dimensional electrophoresis.

The mixing duct 26 of the LOC diagnosis device according to the invention is provided in order to optimize the mixing of the sample to be analyzed with the first buffer liquid for conditioning and stabilization, so as to prepare that sample for the subsequent operations.

Advantageously, the first buffer liquid for conditioning and stabilization contains the necessary components in order to prevent side effects that would render the analysis of the sample impossible, such as for example pH aberrations, coagulation of blood, or unwanted precipitations; furthermore, the first buffer liquid for conditioning and stabilization can contain molecules that, by reacting with the analyte, make it more easily identifiable in the conditions of detection.

The conditioning and the stabilization of the sample to be analyzed are made particularly necessary for samples that can, in the short term, experience biochemical modifications that would make then no longer possible to analyze them or which would lead to the degradation of the analyte of interest. For example, for analyzing blood, coagulation has to be prevented and also the false results generated by bivalent cations, and therefore the first buffer liquid for conditioning and stabilization will have to contain both anticoagulants and chelating agents. The composition of the first buffer liquid for conditioning and stabilization is therefore closely linked to the nature of the sample to be analyzed and to the analyte of interest.

The quantity in volume of the sample to be analyzed is preferably in the order of a microliter, and the first buffer liquid for conditioning and stabilization is adapted to dilute this sample by percentage values in the order of 50%.

Since the first buffer liquid for conditioning and stabilization, and also the second buffer liquid, are loaded in the LOC diagnosis device according to the invention directly during production, in order to prevent their egress, evaporation or contamination during handling or storage, the loading stations 22, 30 and the vents 20 advantageously can be closed, for example by way of a layer of removable adhesive material arranged on a face of the LOC diagnosis device.

The first microfluidic pump 32 operates first as a pump for microfluidic movement of the conditioned sample, and then as a drain for collecting and eliminating the waste first buffer liquid for conditioning and stabilization, i.e. the part that does not contain the useful sample to be analyzed.

The conditioned sample, after the mechanical or electrical opening of the first single-use valve 40, continues on its path in the electrophoretic injection duct 38. At this point, what is capable of being moved under the action of the electrical field generated by the pair of electrodes 46a and 46b is pushed dynamically into the electrophoresis chamber 44, in the direction dictated by the polarization of the electrical field itself.

The vents for the passage of air which are present in the LOC diagnosis device according to the invention are made so as to maintain the correct air/fluid interface in the microfluidic ducts, thus ensuring the movement by capillary action of the fluids, such as for example the first buffer liquid for conditioning and stabilization, the second buffer liquid, or the conditioned sample.

Advantageously, the chambers present in the LOC diagnosis device according to the invention are conveniently dimensioned in order to maintain the capillary flow at constant pressure, as the excess volume of sample flows into the first buffer tank 24. In fact, when the first buffer tank 24 is emptied, the second microfluidic valve 28 sucks the excess volume of sample back into that tank, so that nothing remains outside the LOC diagnosis device.

In order to allow the penetration of the sample into the separative filtering material and the subsequent extraction of the analyte, it is necessary to avoid any gaseous interface between the separative filtering material and the sample to be analyzed. For this reason, the electrophoretic injection duct 38 and the electrophoretic extraction duct 52 give directly onto the separative filtering material.

Advantageously, the electrophoretic extraction duct 52 is filled with the second buffer liquid, i.e. a saline solution with an ionic strength and a pH value that are conducive to maintain the extracted analyte, now purified, in solution and at the correct concentration for subsequent detection.

The outflow of the analyte from the electrophoresis chamber 44, and its consequent inflow into the electrophoretic extraction duct 52 which is filled with the second buffer liquid (saline solution), are obtained by way of the application of an electrical field that is perpendicular to the separative electrophoresis electrical field. This perpendicular electrical field is provided by the pair of electrodes 50a and 50b which are arranged above and below the electrophoresis chamber 44.

Advantageously, the electrophoretic extraction duct 52 can be conveniently subdivided in order to bring the extract into a plurality of detection chambers so as to simultaneously detect and quantify a plurality of analytes of interest.

Advantageously, the pairs of electrodes 46a and 46b, 48a and 48b, 50a and 50b can be arranged according to alternative configurations, as long as they enable the cycle of injection, movement and extraction of the conditioned sample and/or of the analyte.

The dimensions of the second buffer tank 56 and of the third microfluidic pump 58, the length of the electrophoretic extraction duct 52, and the arrangement of the vents and of the single-use valves, are conveniently configured so that the analyte, extracted from the electrophoresis chamber 44 and introduced into the second buffer liquid contained in the electrophoretic extraction duct 52, is transported microfluidically to the detection chamber 54.

Advantageously, the LOC diagnosis device according to the invention is configured so as to have an overflow action that makes it possible to suck the excess volume of sample back into the first buffer tank 24, when it is emptied.

The configuration of this overflow action is particularly useful when the sample to be analyzed is related to infectious diseases and/or to chemically hazardous activities, as well as for problems associated with privacy.

In an embodiment of the LOC diagnosis device according to the invention, the sample loading station 22 advantageously comprises a funnel-like element adapted to enable an optimal microfluidic inflow of the sample to be analyzed, and to facilitate the automatic microfluidic sucking back of the drop of sample placed in contact with it.

Advantageously, the funnel-like element of the sample loading station 22 can be advantageously made of vitreous or polymeric material, such as for example PMDS or SU8, by way of micro-molding or hot-embossing techniques, and can be fixed at adapted fixing points by way of laser-welding techniques.

All the structures of chambers and capillary ducts are provided in a single chip by way of electronic lithography techniques. This chip can be provided starting from one or more superimposed wafers of the same or different kinds. Chambers and ducts can be provided advantageously in the material of the chip by way of the vertical etching technique, or other conventional methods in the sector.

Advantageously, one or more of the capillary ducts present in the LOC diagnosis device according to the invention can be provided with pumps, preferably microfluidic, which are adapted to favor the flow of the fluid inside the ducts, such as for example the microfluidic pumps 32, 42 and 58 which are arranged proximate to the mixing duct 26, proximate to the electrophoretic injection duct 38, and so on.

The method of the LOC diagnosis device according to the invention for the detection of a analyte of interest in a native sample or in a treated sample of a biological fluid to be analyzed is described briefly below.

After removal of the layer of adhesive material closing the loading stations 22, 30 and the vents 20, the internal conditions of the LOC diagnosis device according to the invention, in particular the internal pressure and/or temperature, are instantly aligned with the external environmental conditions of use.

The sample of biological fluid to be analyzed is introduced directly into the sample loading station 22, and sets in motion the first buffer liquid introduced into the buffer loading station 30, which leads the microfluidic propagation movement along the mixing duct 26 so as to obtain an optional conditioning.

Once it reaches the second microfluidic valve 28, the sample comes into contact with the first buffer liquid for conditioning and stabilization originating from the first buffer tank 24. Continuing on its path along the mixing duct 26, the sample is conditioned and stabilized in order to prevent possible deterioration effects, in order to optimize the pH level and optionally activate the analyte for detection.

In the calibration chamber 36, an adapted molecule, for example Azure C, at known concentration, is analyzed in order to determine the dilution of the first buffer liquid, which has a known volume based on the loading in the suitable first buffer tank 24, and as a consequence determine the volume of sample actually treated in the mixing duct 26.

In its passage through the electrophoresis chamber 44, the analyte is freed of accompanying proteins and impurities such as for example corpuscles, cells, lipids, potentially bothersome chemical elements, and other proteins. At the same time, the analyte is concentrated by virtue of the dynamic injection and is extracted from the electrophoresis chamber 44 optimized in terms of composition and pH for detection, with a second buffer liquid originating from the second buffer tank 56.

In order to detect the analyte, free or deriving from reactions with an adapted activator present in the first buffer liquid for conditioning and stabilization, it is possible to use a suitable optimal analytical method to detect the analyte in question. In the preferred configuration, it is possible to use an electrochemical analytical method, using the most suitable electrodes to detect the analyte in question.

Capillary pressure is the motor that makes it possible for the sample to move in the LOC diagnosis device according to the invention, in particular in the corresponding ducts, as long as the air contained in it is able to conveniently compress and expand in order to prevent the capillary pressure from being insufficient to enable the movement of the sample.

In practice it has been found that the invention fully achieves the set aim and objects. In particular, it has been seen that the lab-on-a-chip diagnosis device thus conceived makes it possible to overcome the qualitative limitations of the known art, in that it enables an easy and intuitive use, even by operators with no specific training, under any condition of pressure and temperature, inconvenience and/or emergency, without further contrivances.

An advantage of the lab-on-a-chip diagnosis device according to the present invention consists in that it enables an auto-stabilization of the internal conditions of pressure and temperature, thus ensuring its stability under all possible environmental conditions of use independently of the environmental conditions of production and storage.

In practice, the LOC diagnosis device according to the invention can function under all possible environmental conditions of use independently of the environmental conditions of production and storage, by virtue of the network of ducts 18 and the plurality of vents 20 which instantly align the internal pressure and temperature with those of the external environment, i.e. the environment of use.

Another advantage of the lab-on-a-chip diagnosis device according to the present invention consists in that it can be used on any type of sample to be analyzed, native or treated, without any preliminary calibration of the LOC diagnosis device.

In particular, the LOC diagnosis device according to the invention makes it possible to directly analyze a native sample taken from the patient or placed by the patient in the loading station, for example by contact, without the need for preliminary treatments, given that all the operations necessary to the detection of the analyte of interest, from stabilization to purification, occur in the LOC diagnosis device itself.

Likewise, the LOC diagnosis device according to the invention makes it possible to analyze a sample that has been subjected to preliminary treatments.

Another advantage of the lab-on-a-chip diagnosis device according to the present invention consists in that it ensures the conservability and unalterability of the device proper, of the materials and of the internal fluids.

Another advantage of the lab-on-a-chip diagnosis device according to the present invention consists in that it provides quantitative diagnostic indications that are highly accurate, reliable and repeatable, and also rapidly executed.

In particular, the LOC diagnosis device according to the invention allows the direct loading of the sample to be analyzed, thus ensuring a higher level of accuracy in the collection of data and better reliability and reproducibility of the results.

Another advantage of the lab-on-a-chip diagnosis device according to the present invention consists in that its use does not require any manipulation (or very limited manipulation) by the operator of the biological sample to be analyzed, thus reducing the risks of human error and/or of contamination of the sample by external agents, and increasing the safety of use as well as the accuracy and reliability of measurement.

Another advantage of the lab-on-a-chip diagnosis device according to the present invention consists in that it is more versatile than conventional diagnosis devices.

In fact, the LOC diagnosis device according to the invention is capable of analyzing samples of biological fluids with extremely different chemical/physical characteristics (for example blood, urine or others, native or treated), by virtue of the system entailing a drop of buffer liquid which makes it possible to optimize the microfluidic flow speed, with consequent optimal conditioning and stabilization for the purposes of subsequent detection and quantification.

Furthermore, the LOC diagnosis device according to the invention does not require fixing of the analyte of interest and of any detection reagents, since the isolation between the parts that make up the device is provided directly by the separative filtering material contained in the electrophoresis chamber 44.

In addition to this, the diagnosis device according to the invention includes a calibration chamber for calibrating the device proper. In fact the calibration test, i.e. a test on reagents that are quantitatively and qualitatively known, is indispensable in any experimental biological detection, in order to prevent the deterioration of the detection reagents, or decalibration, from leading to potentially dangerous false results. The fact that this calibration test can be carried out automatically starting from the sample to be analyzed in the device itself ensures the homogeneity of the results, a time saving, and higher reliability of the measurement.

Another advantage of the lab-on-a-chip diagnosis device according to the present invention consists in that it does not require any particular activation of the surfaces through which the sample passes. In fact, no special processing of these surfaces is required in order to make them receptive to the various operations.

Although the lab-on-a-chip diagnosis device according to the invention has been conceived in particular for the field of clinical diagnostics, it can also be used, more generally, in the field of biological, immunological, pharmacological and biochemical research, and also in the industrial field, for example in the food sector.

The invention, thus conceived, is susceptible of numerous modifications and variations, all of which are within the scope of the appended claims.

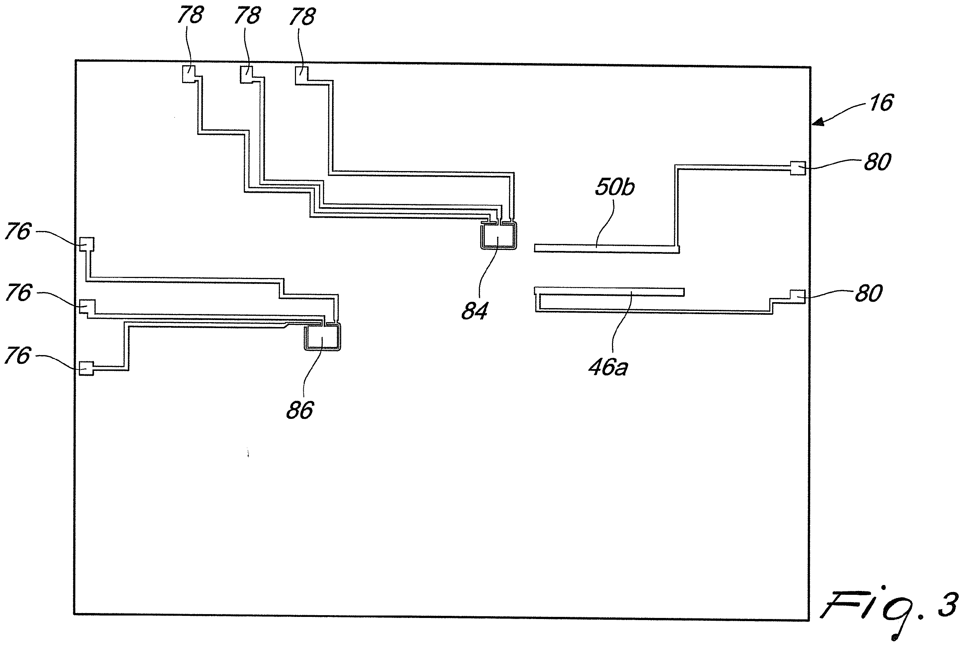

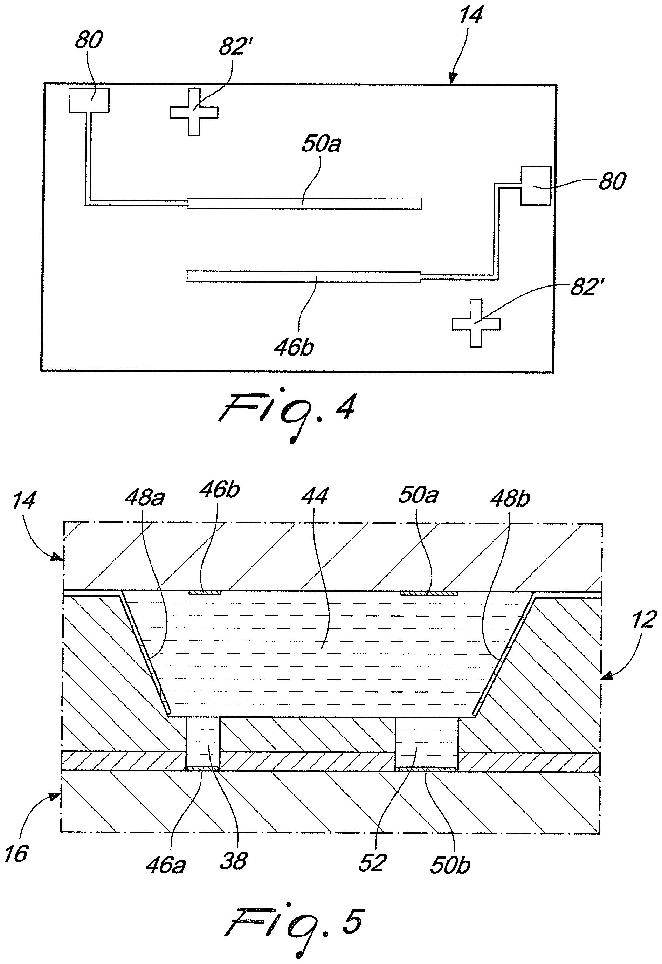

Thus, for example, Figure 4 is a schematic plan view of the lower face of the level closing the electrophoresis chamber of an embodiment of the lab-on-a-chip diagnosis device, according to the present invention, but it should be understood that this closing level can be embedded in a single upper layer that will also comprise the level closing the chamber for the conditioning buffer and which will cover the entire surface of the layer of silicon, as happens for the layer of glass of Figure 3.

Moreover, all the details may be substituted by other, technically equivalent elements.

In practice the materials employed, provided they are compatible with the specific use, and the contingent dimensions and shapes, may be any according to requirements and to the state of the art.

In conclusion, the scope of protection of the claims shall not be limited by the explanations or by the preferred embodiments illustrated in the description by way of examples.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A lab-on-a-chip diagnosis device, which comprises:
- a network of ducts (18) and a plurality of vents (20) that are adapted to stabilize the internal conditions of pressure and temperature of said diagnosis device, by making them conform to the external environmental conditions of use;
- a sample loading station (22) adapted to introduce a sample of biological fluid to be analyzed;
- a first buffer tank (24) containing a first buffer liquid for conditioning and stabilizing said sample;
- a mixing duct (26) adapted to mix together said first buffer liquid and said sample;
- an electrophoresis chamber (44) containing a separative filtering material, and adapted to purify said conditioned sample and to concentrate at least one analyte of interest;
- a detection chamber (54) adapted to detect and quantify the presence of said at least one analyte of interest in an extract from said electrophoresis chamber (44) **characterized in that** the lab-on-a-chip diagnosis device further comprises a calibration chamber (36) associated to a set of electrodes (86) and adapted to quantify the volume of said introduced sample and as a consequence to calibrate said diagnosis device, said calibration chamber being located between the mixing duct (26) and the electrophoresis chamber (44).

2. The lab-on-a-chip diagnosis device according to claim 1, further comprising a buffer loading station (30) adapted to introduce a drop of buffer liquid at the inlet of said mixing duct (26), to lead the microfluidic propagation of said sample to be analyzed.

3. The lab-on-a-chip diagnosis device according to any one of the preceding claims, further comprising a microfluidic valve (28) adapted to separate said first buffer tank (24) and said mixing duct (26).

4. The lab-on-a-chip diagnosis device according to any one of the preceding claims, further comprising a first microfluidic pump (32) which is adapted first to pump said conditioned sample, and then to trap and collect a waste portion of said first buffer liquid.

5. The lab-on-a-chip diagnosis device according to any one of the preceding claims, further comprising an electrophoretic injection duct (38), which is adapted to introduce said conditioned sample into said electrophoresis chamber (44), and an electrophoretic extraction duct (52), which is adapted to extract said conditioned sample from said electrophoresis chamber (44).

6. The lab-on-a-chip diagnosis device according to claim 5, further comprising a first single-use valve (40) adapted to separate said mixing duct (26) and said electrophoretic injection duct (38).

7. The lab-on-a-chip diagnosis device according to any one of the claims from 5 to 6, further comprising a second buffer tank (56) containing a second buffer liquid and connected with said electrophoretic extraction duct (52).

8. The lab-on-a-chip diagnosis device according to any one of the claims from 4 to 7, further comprising a second microfluidic pump (42) connected with said electrophoretic injection duct (38) and adapted to pump said conditioned sample to the inlet of said injection duct (38) .

9. The lab-on-a-chip diagnosis device according to any one of the claims from 4 to 8, further comprising a third microfluidic pump (58) connected with said electrophoretic extraction duct (52) and adapted to pump said conditioned sample extracted from said electrophoresis chamber (44).

10. The lab-on-a-chip diagnosis device according to any one of the preceding claims, wherein said electrophoresis chamber (44) comprises a first pair of electrophoresis electrodes (46a, 46b), a second pair of electrophoresis electrodes (48a, 48b), and a third pair of electrophoresis electrodes (50a, 50b).

11. The lab-on-a-chip diagnosis device according to any one of the preceding claims, further comprising a layer of removable adhesive material, arranged on one face of said diagnosis device, and adapted to close loading stations (22, 30) and vents (20) of said diagnosis device.

## Patentansprüche

1. Lab-on-a-Chip Diagnosevorrichtung, aufweisend:
- ein Kanalnetzwerk (18) und eine Vielzahl von Öffnungen (20), die geeignet sind, um interne Druck- und Temperaturverhältnisse der Diagnosevorrichtung zu stabilisieren, indem sie an die externen Umgebungsverhältnisse angepasst werden;
- eine Probenbeladestation (22), die geeignet ist, eine Probe zu analysierender biologischer Flüssigkeit einzubringen;
- einen ersten Pufferspeicher (24), der eine erste Pufferflüssigkeit zum Aufbereiten und Stabilisieren der Probe enthält;
- einen Mischkanal (26), der geeignet ist, die erste Pufferflüssigkeit und die Probe zu mischen;
- eine Elektrophoresekammer (44), die ein Abscheidefiltermaterial enthält, und geeignet ist, die aufbereitete Probe zu reinigen und zumindest ein nachzuweisendes Analyt zu konzentrieren;
- eine Detektionskammer (54), die geeignet ist, die Anwesenheit des zumindest einen nachzuweisenden Analyts in einem Extrakt der Elektrophoresekammer (44) zu ermitteln und zu quantifizieren, **dadurch gekennzeichnet, dass** die Lab-on-a-Chip Diagnosevorrichtung des Weiteren eine Kalibrierkammer (36) aufweist, die mit einem Set von Elektroden (86) verbunden und geeignet ist, das Volumen der eingebrachten Probe zu quantifizieren und somit die Diagnosevorrichtung zu kalibrieren, wobei die Kalibrierkammer zwischen dem Mischkanal (26) und der Elektrophoresekammer (44) angeordnet ist.

2. Lab-on-a-Chip Diagnosevorrichtung gemäß Anspruch 1, weiter aufweisend eine Pufferbeladestation (30), die geeignet ist, einen Tropfen der Pufferflüssigkeit am Einlass des Mischkanals (26) einzubringen, um die mikrofluidische Weitergabe der zu analysierenden Probe zu leiten.

3. Lab-on-a-Chip Diagnosevorrichtung gemäß einem der vorigen Ansprüche, weiter aufweisend ein mikrofluidisches Ventil (28), das geeignet ist, den ersten Pufferspeicher (24) und den Mischkanal (26) zu trennen.

4. Lab-on-a-Chip Diagnosevorrichtung gemäß einem der vorigen Ansprüche, weiter aufweisend eine erste mikrofluidische Pumpe (32), die geeignet ist, zunächst die aufbereitete Probe zu fördern, und danach einen Abfall-Anteil der ersten Pufferflüssigkeit einzufangen.

5. Lab-on-a-Chip Diagnosevorrichtung gemäß einem der vorigen Ansprüche, weiter aufweisend einen elektrophoretischen Injektionskanal (38), der geeignet ist, die aufbereitete Probe in die Elektrophoresekammer (44) einzubringen, sowie einen elektrophoretischen Extraktionskanal (52), der geeignet ist, die aufbereitete Probe aus der Elektrophoresekammer (44) zu extrahieren.

6. Lab-on-a-Chip Diagnosevorrichtung gemäß Anspruch 5, weiter aufweisend ein erstes Einmalventil (40), das geeignet ist, den Mischkanal (26) und den elektrophoretischen Injektionskanal (38) zu trennen.

7. Lab-on-a-Chip Diagnosevorrichtung gemäß einem der Ansprüche 5 bis 6, weiter aufweisend einen zweiten Pufferspeicher (56), der eine zweite Pufferflüssigkeit beinhaltet und der mit dem elektrophoretischen Extraktionskanal (52) verbunden ist.

8. Lab-on-a-Chip Diagnosevorrichtung gemäß einem der Ansprüche 4 bis 7, weiter aufweisend eine zweite mikrofluidische Pumpe (42), die mit dem elektrophoretischen Injektionskanal (38) verbunden und geeignet ist, die aufbereitete Probe zum Einlass des Injektionskanals (38) zu fördern.

9. Lab-on-a-Chip Diagnosevorrichtung gemäß einem der Ansprüche 4 bis 8, weiter aufweisend eine dritte mikrofluidische Pumpe (58), die mit dem elektrophoretischen Extraktionskanal (52) verbunden und geeignet ist, die aufbereitete Probe, die aus der Elektrophoresekammer (44) extrahiert wurde, zu fördern.

10. Lab-on-a-Chip Diagnosevorrichtung gemäß einem der vorigen Ansprüche, wobei die Elektrophoresekammer (44) ein erstes Paar von Elektrophorese-Elektroden (46a, 46b), ein zweites Paar von Elektrophorese-Elektroden (48a, 48b) und ein drittes Paar von Elektrophorese-Elektroden (50a, 50b) aufweist.

11. Lab-on-a-Chip Diagnosevorrichtung gemäß einem der vorigen Ansprüche, weiter aufweisend eine Schicht wiederentfernbaren, adhäsiven Materials, das auf einer Seite der Diagnosevorrichtung angeordnet und geeignet ist, die Beladestationen (22, 30) und die Ventile (20) zu verschließen.

## Revendications

1. Dispositif de diagnostic de type laboratoire sur puce, qui comprend :
- un réseau de conduits (18) et une pluralité d'évents (20) qui sont aptes à stabiliser les conditions internes de pression et température dudit dispositif de diagnostic, en les rendant conformes aux conditions environnementales externes d'utilisation ;
- un poste de chargement d'échantillon (22) apte à introduire un échantillon de fluide biologique à analyser ;
- un premier réservoir de solution tampon (24) contenant un premier liquide tampon pour conditionner et stabiliser ledit échantillon ;
- un conduit de mélange (26) apte à mélanger ensemble ledit premier liquide tampon et ledit échantillon ;
- une chambre d'électrophorèse (44) contenant un matériau filtrant de séparation, et apte à purifier ledit échantillon conditionné et à concentrer au moins un analyte d'intérêt ;
- une chambre de détection (54) apte à détecter et quantifier la présence dudit au moins un analyte d'intérêt dans un extrait provenant de ladite chambre d'électrophorèse (44) **caractérisé en ce que** le dispositif de diagnostic de type laboratoire sur puce comprend en outre une chambre d'étalonnage (36) associée à un ensemble d'électrodes (86) et apte à quantifier le volume dudit échantillon introduit et par conséquent à étalonner ledit dispositif de diagnostic, ladite chambre d'étalonnage étant localisée entre le conduit de mélange (26) et la chambre d'électrophorèse (44).

2. Dispositif de diagnostic de type laboratoire sur puce selon la revendication 1, comprenant en outre un poste de chargement de solution tampon (30) apte à introduire une goutte de liquide tampon en correspondance de l'entrée dudit conduit de mélange (26), pour guider la propagation microfluidique dudit échantillon à analyser.

3. Dispositif de diagnostic de type laboratoire sur puce selon l'une quelconque des revendications précédentes, comprenant en outre une vanne microfluidique (28) apte à séparer ledit réservoir de solution tampon (24) dudit conduit de mélange (26).

4. Dispositif de diagnostic de type laboratoire sur puce selon l'une quelconque des revendications précédentes, comprenant en outre une première pompe microfluidique (32) qui est apte d'abord à pomper ledit échantillon conditionnée, et ensuite à piéger et recueillir une partie de déchet dudit premier liquide tampon.

5. Dispositif de diagnostic de type laboratoire sur puce selon l'une quelconque des revendications précédentes, comprenant en outre un conduit d'injection électrophorétique (38), qui est apte à introduire ledit échantillon conditionné dans ladite chambre d'électrophorèse (44), et un conduit d'extraction électrophorétique (52), qui est apte à extraire ledit échantillon conditionné de ladite chambre d'électrophorèse (44).

6. Dispositif de diagnostic de type laboratoire sur puce selon la revendication 5, comprenant en outre une première vanne à usage unique (40) apte à séparer ledit conduit de mélange (26) et ledit conduit d'injection électrophorétique (38).

7. Dispositif de diagnostic de type laboratoire sur puce selon l'une quelconque des revendications de 5 à 6, comprenant en outre un deuxième réservoir de solution tampon (56) contenant un deuxième liquide tampon et relié audit conduit d'extraction électrophorétique (52).

8. Dispositif de diagnostic de type laboratoire sur puce selon l'une quelconque des revendications de 4 à 7, comprenant en outre une deuxième pompe microfluidique (42) reliée audit conduit d'injection électrophorétique (38) et apte à pomper ledit échantillon conditionné dans l'entrée dudit conduit d'injection (38).

9. Dispositif de diagnostic de type laboratoire sur puce selon l'une quelconque des revendications de 4 à 8, comprenant en outre une troisième pompe microfluidique (58) reliée audit conduit d'extraction électrophorétique (52) et apte à pomper ledit échantillon conditionné extrait de ladite chambre d'électrophorèse (44).

10. Dispositif de diagnostic de type laboratoire sur puce selon l'une quelconque des revendications précédentes, dans lequel ladite chambre d'électrophorèse (44) comprend une première paire d'électrodes d'électrophorèse (46a, 46b), une deuxième paire d'électrodes d'électrophorèse (48a, 48b), et une troisième paire d'électrodes d'électrophorèse (50a, 50b).

11. Dispositif de diagnostic de type laboratoire sur puce selon l'une quelconque des revendications précédentes, comprenant en outre une couche de matériau adhésif amovible, disposée sur une face dudit dispositif de diagnostic, et apte à fermer des postes de chargement (22, 30) et évents (20) dudit dispositif de diagnostic.
